# EUROPEAN PATENT SPECIFICATION

(11) **EP 4 570 604 B1**
(45) Date of publication and mention of the grant of the patent: **18.02.2026**
(21) Application number: 24195414.8
(22) Date of filing: 20.08.2024
(51) Int. Cl.: B60T 13/74

(54) **ELECTROMECHANICAL BRAKE SYSTEM AND OPERATING METHOD THEREOF**
ELEKTROMECHANISCHE BREMSANLAGE UND BETRIEBSVERFAHREN DAFÜR
SYSTÈME DE FREINAGE ÉLECTROMÉCANIQUE ET SON PROCÉDÉ DE FONCTIONNEMENT

(30) Priority: 12.12.2023 KR 20230179616
(43) Date of publication of application: 18.06.2025
(73) Proprietor: HL Mando Corporation, Pyeongtaek-si, Gyeonggi-do 17962 (KR)
(72) Inventor: LIM, Woochul, 17962 Pyeongtaek-si, Gyeonggi-do (KR)
(74) Representative: BCKIP Part mbB

(56) References cited:
- EP-B1- 1 058 795
- CN-A- 109 990 021
- US-A1- 2006 290 201
- US-A1- 2023 060 796

## Description

### TECHNICAL FIELD OF THE INVENTION

The present invention relates to an electromechanical brake system and an operating method thereof, and more particularly, to an electromechanical brake system capable of improving operational stability and facilitating smooth maintenance, and an operating method thereof.

### DESCRIPTION OF THE RELATED ART

Vehicles are essentially equipped with a brake system to perform braking. In recent years, various types of brake systems are being proposed to secure driver safety and convenience.

Conventional brake systems mainly use a method in which brake oil is pressurized as a driver applies a pedal force to a brake pedal for braking, and the brake oil with a fluid pressure is supplied to a wheel cylinder to perform the braking. Today, however, as vehicle driving assistance or autonomous driving systems are developed and spread, an electromechanical brake system that receives a driver's braking intention as an electrical signal and uses rotational power of a motor to brake the vehicle based on the electrical signal has emerged.

The electromechanical brake system receives power from an actuator equipped with a motor and a reducer to provide clamping pressure to a brake disc, thereby performing a service brake and a parking brake of the vehicle.

Meanwhile, when the maintenance is required due to wear of a brake pad, failure of various components, etc., to ensure smooth maintenance, the maintenance is performed in a state in which the brake pad is separated from the disc as much as possible. In this case, when the brake pad moves excessively during the process of separating the brake pad from the disc, there is a risk of wear or collision between component elements. In addition, a stuck phenomenon may occur between the component elements, resulting in shortening the lifespan of products and reducing the operational stability.

CN 109 990 021 A discloses a disk brake including a caliper, a linear motor for moving a brake pad towards and away from a disk, and an electric locking component configured to selectively lock or unclamp the motor axis.

### SUMMARY OF THE INVENTION

An object to be achieved by the present invention is to provide an electromechanical brake system capable of securing operational reliability by restricting an allowable retraction range of a ball screw shaft or a maximum separation distance of a brake pad with respect to a disc through mechanical elements, and an operating method thereof.

Another object to be achieved by the present invention is to provide an electromechanical brake system capable of preventing collision and stuck phenomena between component elements with a simple structure, and an operating method thereof.

Still another object to be achieved by the present invention is to provide an electromechanical brake system capable of facilitating maintenance and servicing such as replacement of a brake pad, and an operating method thereof.

Still yet another object to be achieved by the present invention is to provide an electromechanical brake system with improved durability and operational stability of a product, and an operating method thereof.

To this end, the present invention provides an an electromechanical brake system in accordance with claim 1 and a method in accordance with claim 14.

According to an aspect of the present invention, an electromechanical brake system includes: a footer that is provided to be able to advance and retreat to press a brake pad toward a disc rotating along with a wheel of a vehicle; a motor that provides power; a reduction gear unit that reduces and transmits the power of the motor; a power conversion unit that receives the power reduced by the reduction gear unit, converts a rotational motion into a linear motion, and provides the power to the footer; and an actuator housing that has the motor, the reduction gear unit, and at least a portion of the power conversion unit accommodated or supported therein and is mounted on a caliper housing, in which the power conversion unit may include a ball nut that rotates by receiving the power from the reduction gear unit, a ball screw shaft that engages with the ball nut and advances or retreats by rotation of the ball nut in both directions, and is connected to the footer, and the actuator housing may include a stopper that is provided to be able to contact at least a portion of a rear surface or a rear end portion of the ball screw shaft and restricts an allowable retraction range of the ball screw shaft or a maximum separation range of the brake pad with respect to the disc.

The actuator housing may include a support plate that is provided in a direction orthogonal to an axial direction of the disk, and the stopper may be recessed in the support plate.

The stopper may include: a sleeve that extends along the axial direction of the disk so that at least a portion of a rear portion of the ball screw shaft can be drawn; and a seat that is provided on a rear side of the sleeve to be able to face and contact the rear surface or rear end portion of the ball screw shaft.

The electromechanical brake system further includes a controller that controls an operation of the motor. According to an embodiment, the controller may detect a current provided to the motor.

The stopper may further include a damper that is provided on the seat.

The actuator housing may include a first chamber in which the motor is accommodated; a second chamber in which at least a portion of the reduction gear unit is accommodated; and a third chamber in which at least a portion of the power conversion unit is accommodated.

An inner space of the sleeve may be provided on a rear side of the third chamber.

The reduction gear unit may include a driving gear that is provided on a driving shaft of the motor, a driving pulley that is rotatably supported on the actuator housing, a driving belt that is connected to the driving gear and the driving pulley and transmitting a rotational force of the driving gear to the driving pulley, and a driven gear that rotates along with the driving pulley and engages with the ball nut.

The power conversion unit may further include an output gear that is provided in a ring shape and is coupled to the ball nut on an inner side thereof and rotates along with the ball nut, an outer peripheral surface of the output gear may be formed with a first screw thread engaging with the driven gear, and an inner peripheral surface of the ball nut may be formed with a second screw thread engaging with the ball screw shaft.

An outer peripheral surface of the ball screw shaft is formed with a third screw thread that engages with the second screw thread.

The electromechanical brake system may further include a rotation prevention unit that prevents a rotation of the footer and the ball screw shaft, the rotation prevention unit may include a groove that is recessed on a front surface of the footer, and a protrusion that protrudes on a rear surface of a pad plate of an inner brake pad and inserted into the groove.

The rotation prevention unit may be provided eccentrically with respect to a rotation axis of the ball screw shaft.

The electromechanical brake system may further include a parking driving unit that performs parking braking, in which the parking driving unit may include a ratchet that is provided at one end of the driving pulley, a pawl that is provided to be able to be drawn into the ratchet, a pawl housing that rotatably supports the pawl, and a solenoid actuator that has a solenoid pin operating the pawl.

The parking driving unit may further include a torsion spring that elastically supports the pawl in a direction away from the ratchet.

The solenoid actuator may protrude the solenoid pin toward the pawl when power is applied, and draw the solenoid pin into the solenoid actuator when the power is not applied.

The ball nut may include: a body part that extends along the axial direction of the disk and has the output gear coupled to an outer peripheral surface thereof; a head part that is provided at a front end portion of the body part and extends outward in a radial direction; and a thrust bearing that is interposed between a rear surface of the head part and the caliper housing.

According to another aspect of the present invention, an electromechanical brake system includes: a footer that is provided to be able to advance and retreat to press a brake pad toward a disc rotating along with a wheel of a vehicle; a motor that provides power; a reduction gear unit that reduces and transmits the power of the motor; a power conversion unit that includes a rotating element rotating by receiving power from the reduction gear unit and a linear moving element connected to the footer and advancing or retreating by a bidirectional rotation of the rotating element; an actuator housing that has the motor, the reduction gear unit, and at least a portion of the power conversion unit accommodated or supported therein and is mounted on a caliper housing; and a stopper that is provided so that at least a portion of a rear surface or a rear end portion of the linear moving element faces each other and restricts the retreat of the linear moving element by contacting the rear surface or rear end portion of the linear moving element when the linear moving element retreats beyond an allowable retraction range.

The stopper may be provided integrally with the actuator housing.

The stopper may include a damper that is provided at a contact portion with the linear moving element.

An operating method of an electromechanical brake system according to an exemplary embodiment of the present invention includes: a footer that is provided to be able to advance and retreat to press a brake pad toward a disc rotating along with a wheel of a vehicle, a motor that provides power, a reduction gear unit that reduces and transmits the power of the motor, a power conversion unit that receives the power reduced by the reduction gear unit, converts a rotational motion into a linear motion, and provides the power to the footer, and an actuator housing that has at least a portion of the power conversion unit accommodated or supported therein, and a controller that controls an operation of the motor, in which the power conversion unit includes a rotating element rotating by receiving power from the reduction gear unit and a linear moving element connected to the footer and advancing or retreating by a bidirectional rotation of the rotating element, the actuator housing includes a stopper provided to face and contact at least a portion of the linear moving element to restrict an allowable retraction range of the linear moving element, and the controller stops an operation of the motor when a detection device detects that the linear moving element contacts the stopper.

The detection device may include a current sensor that detects a current provided to the motor, and when a current value detected by the current sensor exceeds a preset value, the controller may determine that a retreat distance of the linear moving element reaches the allowable retraction range to stop the operation of the motor.

According to the present invention, the electromechanical brake system and the operating method thereof can secure operational reliability by restricting an allowable retraction range of a ball screw shaft or a maximum separation distance of a brake pad with respect to a disc through mechanical elements.

According to the present invention, the electromechanical brake system and the operating method thereof can prevent collision and stuck phenomena between component elements due to a simple structure.

According to the present invention, the electromechanical brake system and the operating method thereof can facilitate maintenance such as replacement of a brake pad and improve maintainability of a product.

According to the present invention, the electromechanical brake system and the operating method thereof can have improved durability and operational stability of a product.

The effects of the present invention are not limited to the aforementioned effects, and other effects, which are not mentioned above, will be apparently understood to a person having ordinary skill in the art from the following description.

### BRIEF DESCRIPTION OF DRAWINGS

The above and other aspects, features and other advantages of the present invention will be more clearly understood from the following detailed description taken in conjunction with the accompanying drawings, in which:
FIG. 1 is a perspective view illustrating an electromechanical brake system according to the present exemplary embodiment;
FIG. 2 is a cross-sectional view taken along line A-A' of FIG. 1, and is a lateral cross-sectional view of the electromechanical brake system according to the present exemplary embodiment;
FIG. 3 is a perspective view illustrating an actuator according to the present exemplary embodiment;
FIG. 4 is a perspective view illustrating an actuator housing according to the present exemplary embodiment;
FIG. 5 is a side view in another direction illustrating the actuator according to the present exemplary embodiment, and illustrates a state in which a cover is open;
FIG. 6 is a side view in another direction illustrating a reduction gear unit, a power conversion unit, and a parking driving unit according to the present exemplary embodiment;
FIG. 7 is a cross-sectional view taken along line B-B' of FIG. 5;
FIG. 8 is a diagram illustrating a rotation prevention unit according to the present exemplary embodiment, and is an exploded perspective view of an inner brake pad and a footer;
FIGS. 9 to 11 are cross-sectional views sequentially illustrating an operation of the parking driving unit according to the present exemplary embodiment;
FIG. 12 is a lateral cross-sectional view illustrating a braking application mode of the electromechanical brake system according to the present exemplary embodiment;
FIG. 13 is a lateral cross-sectional view illustrating a braking release mode of the electromechanical brake system according to the present exemplary embodiment; and
FIG. 14 is a lateral cross-sectional view illustrating a maintenance mode for maintenance of the electromechanical brake system according to the present exemplary embodiment.

### DETAILED DESCRIPTION OF THE EMBODIMENT

Hereinafter, exemplary embodiments of the present invention will be described in detail with reference to the accompanying drawings. The following exemplary embodiments are presented to sufficiently convey the idea of the present invention to those skilled in the art. The present invention is not limited only to the exemplary embodiments to be presented below, but may be embodied in other forms. In order to clarify the present invention, parts unrelated to the description may be omitted, and a size of components may be slightly exaggerated to aid understanding.

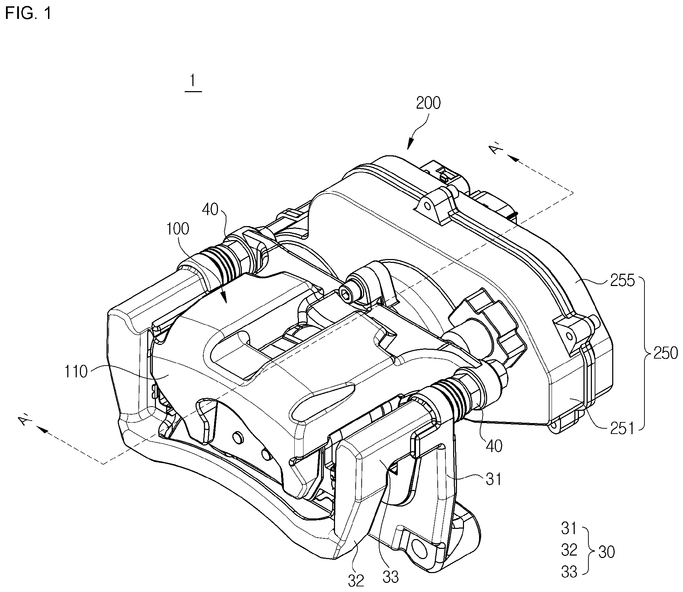

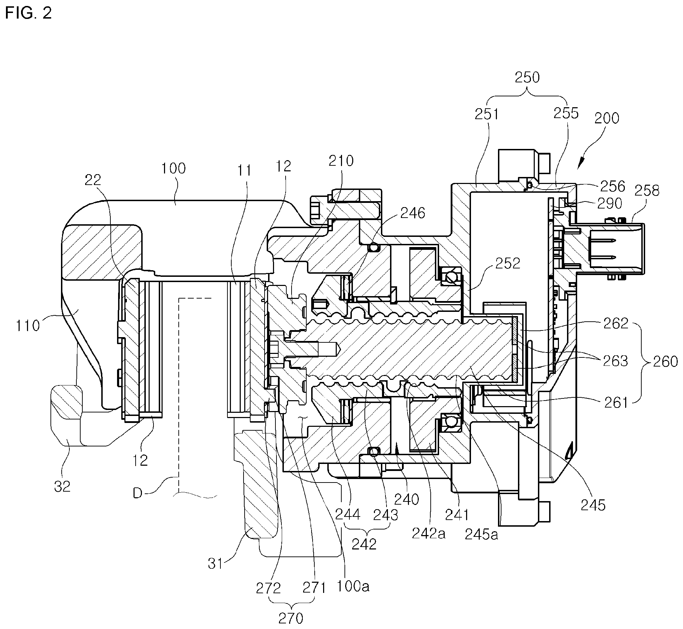

FIG. 1 is a perspective view illustrating an electromechanical brake system 1 according to the present exemplary embodiment, and FIG. 2 is a cross-sectional view taken along line A-A' of FIG. 1, and is a lateral cross-sectional view of the electromechanical brake system 1 according to the present exemplary embodiment.

Referring to FIGS. 1 and 2, the electromechanical brake system 1 includes a carrier 30 on which a pair of pad plates 21 and 22 is installed to press a brake disc D rotating along with a wheel (not illustrated) of a vehicle, a caliper housing 100 that is slidably installed on the carrier 30 to operate the pair of pad plates 21 and 22, a footer 210 that is provided to be able to advance and retreat on an inner side of the caliper housing 100, an actuator 200 that generates power for braking a vehicle and transmits the power to the footer 210, and a controller (not illustrated) that controls an operation of the actuator 200.

The brake disc D is provided to rotate along with a wheel (not illustrated) of a vehicle, and an inner brake pad 11 and an outer brake pad 12 are each disposed on both sides of the brake disc D. The inner brake pad 11 and the outer brake pad 12 are fixedly installed on the inner pad plate 21 and the outer pad plate 22, respectively, and are attached to inner side surfaces (surface facing the brake disc D) of the pair of pad plates 21 and 22, respectively. An outer side surface of the inner pad plate 21 is connected to the footer 210 through a rotation prevention unit 270, which will be described later, and the outer pad plate 22 is installed on a rear surface of a finger part 110 of the caliper housing 100 together with the outer brake pad 12. Through this, when a vehicle is braking, the footer 210 advances to press the inner pad plate 21 and the inner brake pad 11 toward the brake disc D and bring the pads 21 and 11 into close contact with the brake disc D. Due to the reaction force, the caliper housing 100 slides in an opposite direction to an advance direction of the footer 210 with respect to the carrier 30 fixedly installed on a vehicle body, so the outer pad plate 22 and the outer brake pad 12 installed on the finger part 110 of the caliper housing 100 may be pressed against and come into close contact with the brake disc D.

The carrier 30 may be fixed to a supportable fixture such as a vehicle body by a bolt or the like. Guide rods 40 may be slidably provided on both sides of the carrier 30 based on an axial direction of the disk D. To this end, guide holes (not illustrated) formed to penetrate through the footer 210 may be provided on both sides of the carrier 30 along an advance or retreat direction of the guide rod 40 or an advance or retreat direction of the footer 210. The carrier 30 may include an inner side portion 31 on which the inner pad plate 21 and the inner brake pad 11 are movably supported along the advance or retreat direction, an outer side portion 32 on which the outer pad plate 22 and the outer brake pad 12 are movably supported along the advance or retreat direction, and a bridge portion 33 that connects the inner side portion 31 and the outer side portion 32 and is formed with a guide hole. An inner pad spring (not illustrated) may be mounted between the inner side portion 31 and the inner pad plate 21 to elastically support the inner pad plate 21 and the inner brake pad 11 on the inner side portion 32, and an outer pad spring (not illustrated) may be mounted between the outer side portion 32 and the outer pad plate 22 to elastically support the outer pad plate 22 and the outer brake pad 12 on the outer side portion 32.

The footer 210 may be provided in the caliper housing 100 and is able to advance and retreat in an operating space 100a formed along a direction parallel to the axial direction of the disk D. The footer 210 is provided in the disc shape, but a front surface thereof may face and be connected to a rear surface of the inner pad plate 21, and the rotation prevention unit 270, which will be described later, may be provided between the inner pad plate 21 and the footer 210. In addition, the footer 210 has a fastener formed to penetrate through a central portion thereof along the axial direction, and thus, a front end portion of a ball screw shaft 245, which will be described later, is inserted into and coupled to the footer 210, so the footer 210 may advance and retreat along with the ball screw shaft 245. The footer 210 may brake a vehicle by advancing and release the braking of the vehicle by retreating, through the operation of the actuator 200, which will be described later. In this way, the electromechanical brake system 1 according to the present exemplary embodiment electromechanically operates by the actuator 200 without hydraulic action such as brake oil, and thus, may perform both a service brake and a parking brake of a vehicle. A detailed description thereof will be provided below.

The caliper housing 100 includes an operating space 100a that is disposed along the axial direction of the disk D so that the footer 210 can advance and retreat and a finger part 110 that extends and bends outward from a vehicle body and surrounds at least a portion of the outer pad plate 22 and the outer brake pad 12, and a pair of guide rods 40 is fixedly installed on both sides of the disk D based on the axial direction, so the caliper housing 100 may slide along the advance and retreat direction with respect to the carrier 30.

Meanwhile, the front described in the present exemplary embodiment refers to a direction toward the outside of the vehicle body and refers to a left direction based on FIG. 2. Conversely, the rear described in the present exemplary embodiment refers to a direction toward the inner side of the vehicle body and refers to a right direction based on FIG. 2. In addition, the advance and retreat direction or axial direction described in the present exemplary embodiment refers to a direction in which the footer 210 advances and retreats or a direction parallel to a rotation axis of the disk D.

The actuator 200 is provided to receive a driver's intention to brake converted into an electrical signal and provide power for braking a vehicle.

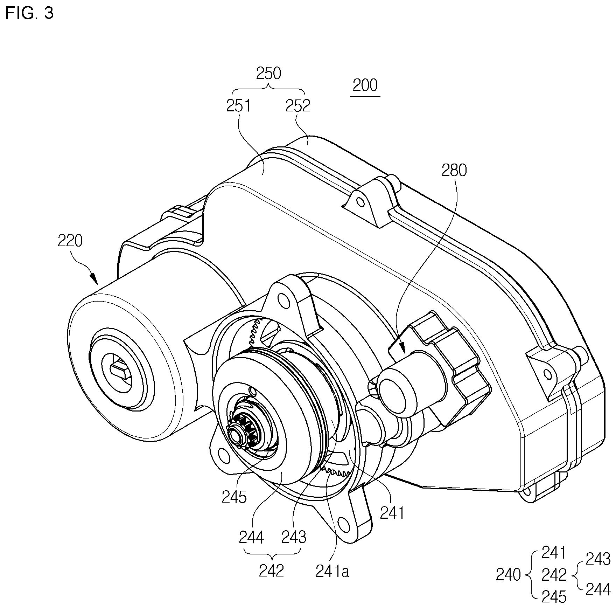

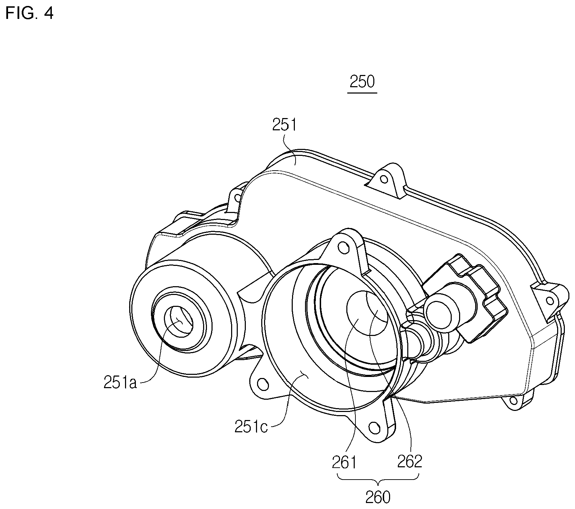

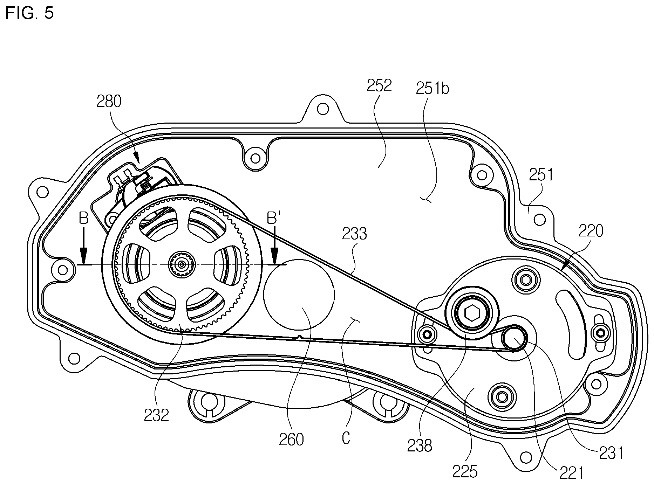

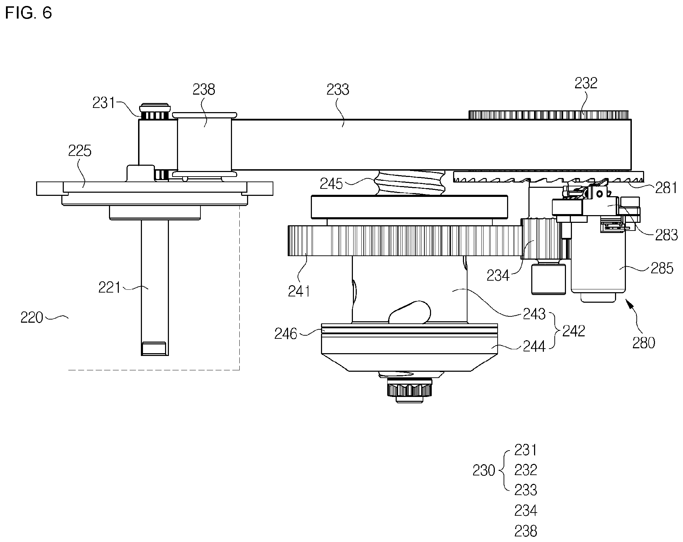

FIG. 3 is a perspective view illustrating the actuator 200 according to the present exemplary embodiment, and FIG. 4 is a perspective view illustrating an actuator housing 250 according to the present exemplary embodiment. In addition, FIG. 5 is a perspective view in another direction illustrating the actuator 200 according to the present exemplary embodiment, and illustrates a state in which a cover 255 is open, and FIG. 6 is a side view from another direction illustrating a reduction gear unit 230, a power conversion unit 240, and a parking driving unit 280 according to the present exemplary embodiment.

Referring to FIGS. 2 to 6, the actuator 200 includes a motor 220 that provides power, a reduction gear unit 230 that reduces and transmits the power of the motor 220, a power conversion unit 240 that receives the reduced rotational power through the reduction gear unit 230 and converts rotational motion into linear motion, a rotation prevention unit 270 that prevents rotation of the footer 210 so that the rotational motion may be smoothly converted into the linear motion by the power conversion unit 240, a parking driving unit 280 that performs parking braking, an actuator housing 250 that has various components accommodated and supported on an inner side thereof, including the motor 220, and is mounted and coupled to the caliper housing 100, and a plurality of bearings that is interposed between component elements.

The motor 220 may operate by receiving power from a power supply apparatus (not illustrated) such as a battery of a vehicle, and may generate rotational power and transmit the rotational power to the reduction gear unit 230, which will be described later. The operation of the motor 220 is controlled by a controller (not illustrated), and a current provided to the motor 220 may be detected by a detection device (not illustrated), which will be described later. When a driver applies a pedal force to a brake pedal to brake a vehicle, a pedal displacement sensor (not illustrated) measures the amount of pedal force or displacement of a brake pedal and transmits information on the measured amount of pedal force or displacement to the controller. The controller may control braking of a vehicle by controlling and adjusting the operating speed or operating amount of the motor 220 based on the pedal force information or pedal displacement information received from the pedal displacement sensor. As such, the actuator 200 according to the present exemplary embodiment may electromechanically operate the motor 220 based on an electrical signal without intervention of hydraulic pressure such as brake oil to perform service braking of a vehicle.

The motor 220 may be equipped with devices of various known structures, such as a stator and a rotor, and the motor 220 may be accommodated in a first chamber 251a of the actuator housing 250, which will be described later. In addition, the motor 220 may be installed in the actuator housing 250 via a mounting plate 225 so that it may be stably mounted and supported on the first chamber 251a of the actuator housing 250. The mounting plate 225 may be disposed on a rear side of the motor 220, the driving shaft 221 may be formed to rotatably penetrate, and the motor 220 may be mounted and supported on the actuator housing 250 through a fastening member such as a bolt. A plurality of component elements provided in the motor 220 may be stably accommodated in the first chamber 251a of the actuator housing 250 through the mounting plate 225, and the first chamber 251a of the actuator housing 250 may be partitioned from a second chamber 251b. A tensioner 238, which will be described later, may be provided on the rear surface of the mounting plate 225, and a detailed description thereof will be provided below.

The actuator housing 250 is provided on the inner side to accommodate and support at least some components of the motor 220, the reduction gear unit 230, the parking driving unit 280, and the power conversion unit 240, which will be described later. The actuator housing 250 may include a support plate 252, a main housing 251 that includes a first chamber 251a in which the motor 220 is accommodated, a second chamber 251b in which the reduction gear unit 230 and a printed circuit board of the controller are accommodated, and a third chamber 251c in which at least a portion of the power conversion unit 240 is accommodated, and a cover 255 that is coupled to a rear side of the second chamber 251b and seals an inner space of the actuator housing 250. The support plate 252 of the main housing 251 is provided in a plate shape and is disposed in a direction orthogonal to the advance and retreat direction or the axial direction to partition the second chamber 251b and the third chamber 251c. The second chamber 251b may be partitioned on the rear side of the support plate 252 of the main housing 251, and the first chamber 251a and the third chamber 251c may be partitioned on the front of the support plate 252. The first chamber 251a may be provided on one side with respect to a central axis of the ball screw shaft 245, which will be described later, on the front side of the support plate 252, and the third chamber 251c may be provided coaxially with the central axis of the ball screw shaft 245, which will be described later, on the front side of the support plate 252.

The support plate 252 may be provided with a stopper 260 that faces and contacts at least a portion of the ball screw shaft 245, which will be described later. The stopper 260 may communicate with or be connected to the third chamber 251c of the main housing 251, and may protrude toward the second chamber 251b simultaneously with being recessed in the third chamber 251c. The stopper 260 may be formed in a central area C of the driving belt 233 to protrude on the second chamber 251b of the main housing 251, which will be described later, and a detailed description thereof will be provided later.

The main housing 251 and the cover 255 may be coupled to each other by the bolt, and a sealing member 256 is interposed along a circumferential portion between the main housing 251 and the cover 255 to prevent foreign substances, such as moisture or dust, from being introduced. The cover 255 may be provided with a power connector 258 that supplies power to the motor 220 and an electrical connector 258 that transmits and sends an electrical signal to a printed circuit board 290 of the controller. The connector 258 is formed to penetrate through the cover 255 and extends along an advance and retreat direction, thereby improving space utilization of the vehicle body when the actuator 200 is mounted on the vehicle. The sealing member may also be interposed between the cover 255 and the connector 258 to prevent and suppress external foreign substances such as moisture or dust from being introduced into the actuator housing 250.

The reduction gear unit 230 is provided to reduce and transmit the power of the motor 220. The reduction gear unit 230 may include a driving gear 231 that is provided on the driving shaft 221 of the motor 220, a driving pulley 232 that is rotatably supported on the actuator housing 250, a driving belt 233 that connects the driving gear 231 and the driving pulley 232 to transmit the rotational power of the driving gear 231 to the driving pulley 232, a driven gear 234 that rotates along with the driving pulley 232, and a tensioner 238 that controls a tension of the driving belt 233. At least some of these may be accommodated and supported on the second chamber 251b of the actuator housing 250.

The driving gear 231 is provided on the driving shaft 221 of the motor 220 and may rotate along with the driving shaft 221. As described above, the first chamber 251a in which the motor 220 is accommodated may be provided on one side of the actuator housing 250 with respect to the central axis of the ball screw shaft 245, which will be described later, and the driving gear 231 provided on the driving shaft 221 of the motor 220 may also be provided on one side of the second chamber 251b of the actuator housing 250. The driving gear 231 may be fixed to the driving shaft 221 or provided integrally with the driving shaft 221, and a gear tooth may be formed on the outer peripheral surface to engage with the driving belt 233, which will be described later.

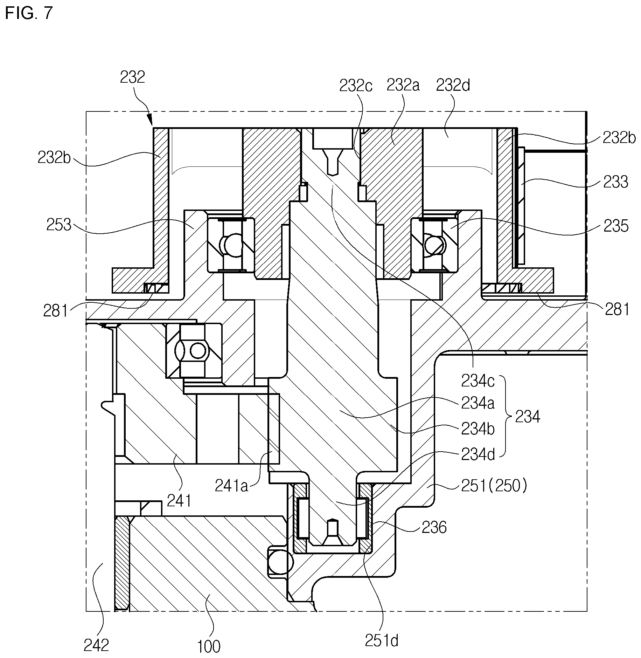

The driving pulley 232 may be supported to rotate freely on the support plate 252. FIG. 7 is a cross-sectional view taken along the B-B' direction of FIG. 5. Referring to FIGS. 5 to 7, the driving pulley 232 may be provided on the other side of the actuator housing 250 with respect to the central axis of the ball screw shaft 245, which will be described later. The driving pulley 232 may include a central portion 232a rotatably supported on the support plate 252 and a circumferential portion 232b on which gear teeth engaging with the driving belt 233 are formed, and the support plate 252 may be provided with a gear sleeve 253 that protrudes toward the rear to stably support the driving pulley 232. The gear sleeve 253 may be formed to extend along a circumferential direction of the central portion 232a of the driving pulley 232 and provided in a shape that surrounds the periphery of the central portion 232a. The central portion 232a of the driving pulley 232 may be provided with a shaft hole 232c that is hollow along the axial direction so that a driven gear 234, which will be described later, is inserted and fastened, and the outer peripheral surface of the central portion 232a may be supported on the gear sleeve 253 via a bearing 235. The gear teeth may be formed on the outer peripheral surface of the circumferential portion 232b of the driving pulley 232 and may engage with the driving belt 233, which will be described later. A diameter of the circumferential portion 232b of the driving pulley 232 may be greater than that of the driving gear 231 so that the rotational power of the driving gear 231 may be decelerated in the process of transmitting the rotational power to the driving pulley 232 through the driving belt 233.

In addition, the driving pulley 232 may be formed as an empty space between the central portion 232a and the circumferential portion 232b to allow the gear sleeve 253 and bearing 235 of the support plate 252 to be drawn into the inner side and to reduce the weight of the gear element, and the central portion 232a and the circumferential portion 232b may be connected to each other by a plurality of spokes 232d formed in the rear end portion. A ratchet 281 of a parking driving unit 280, which will be described later, may be formed at a front end portion of the circumferential portion 232b of the driving pulley 232 along the circumferential direction, and a front end portion of the circumferential portion may be expanded outward in the radial direction of the driving pulley 232 so that a contact area of the ratchet 281 and a pawl 282 for stable parking braking may be enlarged. A detailed description of the parking driving unit 280 will be provided later.

One side of the driving belt 233 may engage with the driving gear 231 and the other side thereof may engage with the driving pulley 232, so the rotational power of the driving gear 231 may be transmitted to the driving pulley 232. To this end, the driving belt 233 may be provided in a closed curve shape, and may be formed with gear teeth that engage with gear teeth of the driving gear 231 and gear teeth formed on the outer peripheral surface of the driving pulley 232. The driving belt 233 may be made of an elastic material to reduce a weight of a product, but is not limited thereto, and is provided as a chain or a timing belt and may transmit power between the driving gear 231 and the driving pulley 232. As an empty space is formed in the central area C of the driving belt 233, a space for a stopper 260, which will be described later, may be provided. In this way, by transmitting the rotational power of the motor 220 through the driving belt 233, it is possible to suppress noise and vibration generated during the power transmission process, improve the efficiency of arrangement and packaging of the components of the actuator 200, and promote miniaturization of products.

The driven gear 234 is provided to rotate along with the driving pulley 232. Referring to FIGS. 5 to 7, the driven gear 234 and the driving pulley 232 may rotate coaxially. To this end, the rear portion 234c of the driven gear 234 may be inserted into and fastened to the shaft hole 232c formed in the central portion of the driving pulley 232, and the outer peripheral surface of the central portion 234a of the driven gear 234 may be formed with gear teeth 234b engaging with the power conversion unit 240, which will be described later. A front portion 234d may be inserted into a shaft support groove 251d recessed in the main housing 251 so that the driven gear 234 may freely rotate on the actuator housing 250, and a bearing 236 may be interposed between the outer peripheral surface of the front portion 234d of the driven gear 234 and the shaft support groove 251d so that the driven gear 234 may smoothly rotate on the main housing 251. The gear tooth 234b provided on the outer peripheral surface of the driven gear 234 may engage with a ball nut 242 of the power conversion unit 240, which will be described later, and a diameter of the central portion 234a where the gear tooth 234b is provided may be set smaller than that of the circumferential portion 232b of the driving pulley 232.

The tensioner 238 is provided to adjust the tension of the driving belt 233. The tensioner 238 may be rotatably provided on the mounting plate 225, and may rotate to increase or decrease the tension of the driving belt 233. To this end, the outer peripheral surface of the tensioner 238 contacting the driving belt 233 may have an elliptical cross-sectional shape. When it is desired to increase the tension of the driving belt 233 during the assembly or maintenance process of the actuator 200, a major axis end portion of the tensioner 238 may come into contact with the driving belt 233, and conversely, when it is desired to reduce the tension of the driving belt 233, a minor axis end portion of the tensioner 238 may come into contact with the driving belt 233.

The power conversion unit 240 is provided to receive the reduced rotational power transmitted through the reduction gear unit 230, convert the rotational motion into the linear motion, and transmit the power to the footer 210.

Referring to FIGS. 2, 3 and 6, the power conversion unit 240 includes a rotating element that rotates by receiving power from the reduction gear unit 230 and a linear moving element that is directly or indirectly connected to the footer 210 and advances or retreats by bidirectional rotation of the rotating element.

The rotating element may include an output gear 241 that engages with the driven gear 234 and, according to the invention, includes the ball nut 242 that engages with the ball screw shaft 245, which will be described later. The output gear 241 is provided in a ring shape. A first screw thread 241a that engages with the gear tooth 234b of the driven gear 234 may be formed on an outer peripheral surface of the output gear 241, and the ball nut 242 may be inserted into and coupled to an inner peripheral surface of the output gear 241, so the ball nut 242 and the output gear 241 may rotate together coaxially. The ball nut 242 is provided in a hollow cylindrical shape, but may include a body part 243 that extends along the advance and retreat direction or axial direction and a head part 244 that is provided at the front end portion of the body part 243 and extends outward in a radial direction. A second screw thread 242a engaging with the ball screw shaft 245 may be formed on the inner peripheral surface of the ball nut 242, and a thrust bearing 246 may be interposed between the rear surface of the head part 244 and the caliper housing 100 so that the ball nut 242 may smoothly rotate in the operating space of the caliper housing 100. The inner peripheral surface of the output gear 241 and the outer peripheral surface of the ball nut 242 may be coupled to each other in a serrated structure so that the relative rotation of the output gear 241 and the ball nut 242 may be restricted and constrained.

The linear moving element is connected to the rotating element and receives rotational power, but may advance or retreat by rotating the rotating element in both directions. The linear moving element, according to the invention, is composed of the ball screw shaft 245, and a third screw thread 245a engaging with the second screw thread 242a provided on the inner peripheral surface of the ball nut 242 may be formed on the outer peripheral surface of the ball screw shaft 245. The second screw thread 242a of the ball nut 242 and the third screw thread 245a of the ball screw shaft 245 engage with each other via a ball (not illustrated), so the rotational power of the ball nut 242 is transferred to the ball screw shaft 245, and the rotation of the ball screw shaft 245 is limited by the rotation prevention unit 270, which will be described later, so that the ball screw shaft 245 may move linearly by receiving the rotational power of the ball nut 242. The footer 210 is coupled to the front end portion of the ball screw shaft 245, so that the footer 210 and the ball screw shaft 245 may advance and retreat together. The footer 210 and the ball screw shaft 245 may be fastened to each other by a bolt or coupled to each other in the serrated structure, so the relative rotation between the footer 210 and the ball screw shaft 245 may be restricted and constrained. The allowable retraction range of the footer 210 and the ball screw shaft 245 is restricted by the stopper 260, which will be described later, on at least a portion of the rear surface or rear end portion of the ball screw shaft 245. A detailed description thereof will be provided later.

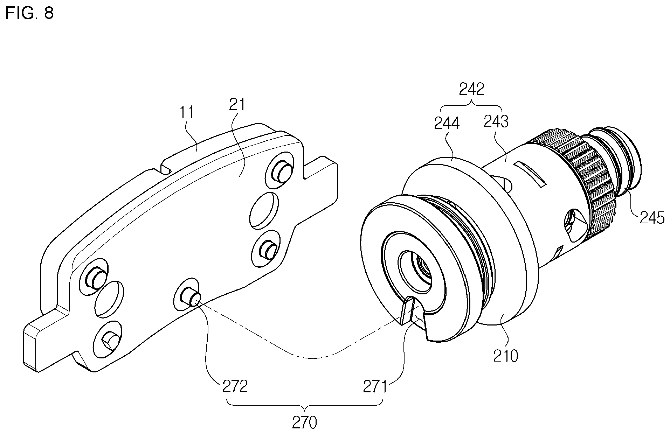

The rotation prevention unit 270 is provided to prevent the rotation of the footer 210 and the ball screw shaft 245. FIG. 8 is a diagram illustrating the rotation prevention unit 270 according to the present exemplary embodiment, and is an exploded perspective view of the inner brake pad 11 and the footer 210.

Referring to FIGS. 2 and 8, the rotation prevention unit 270 may include a groove 271 that is recessed on the front surface of the footer 210 and a protrusion 272 that is formed to protrude on the rear surface of the inner pad plate 21 and is inserted into the groove 271. The rotation prevention unit 270 may be provided to be offset or eccentric with respect to the rotation axis of the ball screw shaft 245 so that the rotation of the footer 210 and the ball screw shaft 245 may be stably restricted by the rotation prevention unit 270. When the output gear 241 and the ball nut 242 rotate by receiving power from the reduction gear unit 230, as the protrusion 272 of the inner pad plate 21 is inserted into the groove 271 formed in the footer 210, the rotation of the footer 210 and the ball screw shaft 245 may be limited, so the ball screw shaft 245 may advance or retreat without rotating along with the ball nut 242.

Meanwhile, when the brake pad is worn and needs to be replaced or when the maintenance is required due to failure of various components, the maintenance work is performed in the state in which the brake pad is separated from the brake disc as much as possible to ensure smooth maintenance. In this case, in the process of separating the brake pad from the brake disc, when the separation distance of the brake pad with respect to the brake disc exceeds a certain range or a retreat distance of the ball screw or nut exceeds a certain range, there is a risk that wear or collision between component elements may occur and furthermore, a stuck phenomenon may occur between component elements.

Accordingly, the electromechanical brake system 1 according to the present invention is provided with a stopper 260 to limit the allowable retraction range of the ball screw shaft 245 without shock, load, etc., on component elements or to limit the maximum separation range of the brake pads 11 and 12 with respect to the brake disc D when the brake pads 11 and 12 are separated from the brake disc D to the maximum for maintenance such as the replacement or maintenance of the brake pads 11 and 12.

Referring to FIGS. 2 and 4, the stopper 260 may be provided integrally with the actuator housing 250, and may be provided to face and contact at least a portion of the ball screw shaft 245. Specifically, the stopper 260 may be formed integrally with the support plate 252 of the actuator housing 250, and the stopper 260 may be formed to protrude toward the rear side of the second chamber 251b on the support plate 252 and recessed toward the rear side of the third chamber 251c, so the stopper 260 may be provided to face and contact the rear surface or rear end portion of the ball screw shaft 245. The stopper 260 may include a cylindrical sleeve 261 that extends along the advance or retreat direction or the axial direction so that at least a portion of the rear portion of the ball screw shaft 245 can be drawn and a sheet 262 that is formed on a rear end portion of the sleeve 261 and faces and contacts the rear surface or rear end portion of the ball screw shaft 245. An inner space of the sleeve 261 into which the rear portion of the ball screw shaft 245 is drawn may be provided on the rear side of the third chamber 251c and may communicate with and be connected to the third chamber 251c. In addition, the sleeve 261 and the seat 262 may protrude and be disposed in the central area c of the driving belt 233 on the second chamber 251b of the main housing 251, so the efficiency of arrangement and packaging of the reduction gear unit 230 and the stopper 260 may be improved.

In this way, when the ball screw shaft 245 retreats to separate the brake pads 11 and 12 from the brake disc D to the maximum in the maintenance mode for maintenance of the electromechanical brake system 1, if the allowable retraction range of the ball screw shaft 245 is exceeded, the rear surface or rear end portion of the ball screw shaft 245 comes into contact with and is caught in the stopper 260. In this state, when the motor 220 continues to operate in the direction in which the ball screw shaft 245 retreats, the current provided to the motor 220 increases, and the controller stops the operation of the motor 220 according to the current information detected by the current sensor (not illustrated) to prevent the excessive retreat of the ball screw shaft 245. In the same sense, in the process of separating the brake pads 11 and 12 from the brake disc D to the maximum in the maintenance mode, when the separation distance of the brake pads 11 and 12 with respect to the brake disc D exceeds the maximum separation range, the rear surface or rear end portion of the ball screw shaft 245, which is coupled to the footer 210 and moves linearly together, comes into contact with and is caught in the stopper 260, thereby preventing excessive retreat of the ball screw shaft 245.

The stopper 260 may further include a damper 263 to reduce shock and noise applied to the actuator housing 250 or the ball screw shaft 245 when the stopper 260 contacts the ball screw shaft 245. The damper 263 is made of an elastically deformable material and is provided to surround at least a portion of the front surface of the seat 262 to absorb the shock and noise generated by the contact between the ball screw shaft 245 and the stopper 260.

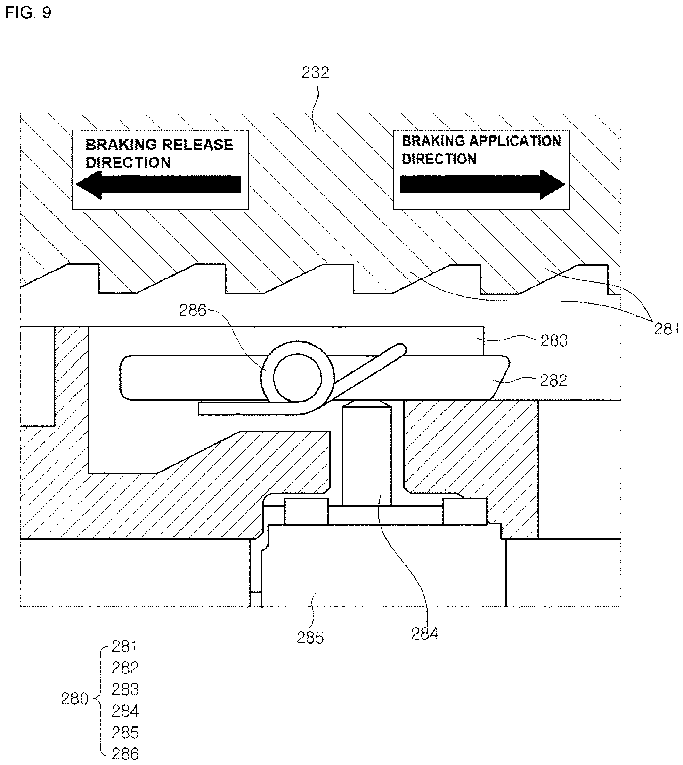

The parking driving unit 280 is provided to perform the parking braking of the vehicle. FIGS. 9 to 11 are lateral cross-sectional views of the parking driving unit 280 according to the present exemplary embodiment, and are cross-sectional views sequentially illustrating the operation of the parking braking.

Referring to FIGS. 6, 9 to 11, the parking driving unit 280 may include a ratchet 281 that is provided on the driving pulley 232, a pawl 282 that is provided to be able to be drawn into the ratchet 281, a pawl housing 283 that rotatably supports the pawl 282, a torsion spring 286 that elastically supports the pawl 282 in a direction away from the ratchet 281, and a solenoid actuator 285 that operates the pawl 282.

The ratchet 281 may be formed continuously along the circumferential direction in the front end portion of the circumferential portion 232b of the driving pulley 232. The gear tooth shape of the ratchet 281 may be formed to be inclined toward a braking application direction of the vehicle, and provided in a shape that protrudes orthogonal to the front surface of the circumferential portion 232b toward a braking release direction of the vehicle, so the rotation may be prevented in the braking release direction of the driving pulley 232 while the pawl 282, which will be described later, engages with the gear teeth of the ratchet 281.

The pawl 282 may be provided to be able to be drawn into the ratchet 281, and may engage with the gear teeth of the ratchet 281 to perform the parking braking or may be separated from the gear teeth of the ratchet 281 to release the parking braking. The pawl 282 may be rotatably provided on the pawl housing 283 and may be elastically supported on the pawl housing 283 by the torsion spring 286. The torsion spring 286 elastically supports the pawl 282 in a direction away from the ratchet 281, so when the pawl 282 and the gear teeth of the ratchet 281 disengage, the torsion spring 286 may allow the pawl 282 to quickly return to the parking braking release position. The pawl housing 283 may be coupled to the actuator housing 250 by the bolt.

The solenoid actuator 285 is provided to engage with the gear teeth of the ratchet 281 by operating the pawl 282. The solenoid actuator 285 includes a solenoid pin 284 that is provided on a lower side of the pawl 282 to rotate the pawl 282 and a pin spring (not illustrated) that elastically supports the solenoid pin 284 in the direction in which the solenoid pin 284 is drawn into the solenoid actuator 285, so the solenoid actuator 285 may protrude the solenoid pin 284 toward the pawl 282 when power is applied and the solenoid pin 284 may be drawn into the solenoid actuator 285 by a pin spring (not illustrated) when power is not applied.

Describing the parking braking of the vehicle by the parking driving unit 280, in the driving situation of the vehicle or when service braking is being performed while the vehicle is driving, the controller does not supply power to the solenoid actuator 285, and thus, the solenoid pin 284 is drawn into the solenoid actuator 285 by the pin spring. At the same time, the pawl 282 also rotates in a direction away from the ratchet 281 by the torsion spring 286 to make the ratchet 281 and the pawl 282 separated from each other, so the driving pulley 232 rotates to apply the service brake or release the service brake (see FIG. 9).

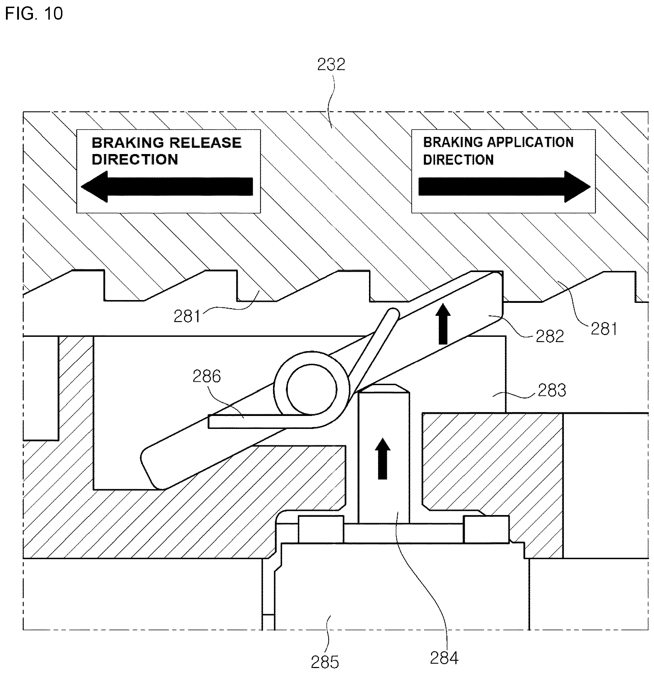

When the controller receives a parking braking operation signal from a driver or a parking braking signal from a transmission of a vehicle, power is applied to the solenoid actuator 285. The solenoid actuator 285 that receives power protrudes the solenoid pin 284 toward the pawl 282 while compressing the pin spring, and as the solenoid pin 284 protrudes, the pawl 282 rotates toward the ratchet 281 and approaches the ratchet 281, so the gear teeth of the pawl 282 and the ratchet 281 engage each other to perform the parking braking (see FIG. 10).

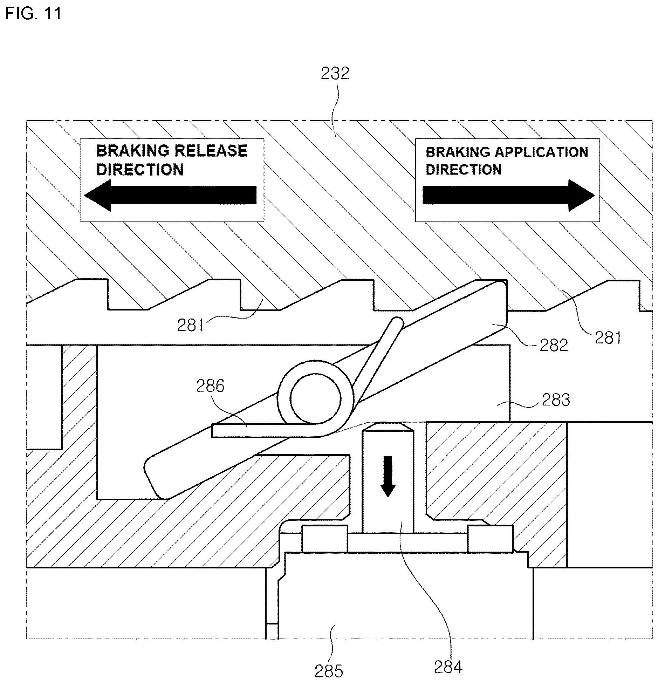

Thereafter, the controller stops supplying power to the solenoid actuator 285 to save power, such as the battery of the vehicle, and accordingly, the solenoid pin 284 returns to the inside of the solenoid actuator 285 by the pin spring. Even if the solenoid pin 284 is drawn into the solenoid actuator 285 and the pawl 282 and the solenoid pin 284 are separated from each other, a fastening force between the pawl 282 and the gear teeth of the ratchet 281 is generated while the driving pulley 232 exerts a force to return to the direction in which the braking is released, so the parking braking state may be maintained (see FIG. 11).

Conversely, when the parking braking is to be released, the controller operates the motor 220 in a small amount in the braking application direction. Accordingly, the driving pulley 232 rotates in a small amount in the braking application direction. In this case, as a gap occurs between the pawl 282 and the gear teeth of the ratchet 281, the pawl 282 rotates in the direction away from the ratchet 281 and returns to its original position by the torsion spring 286. Thereafter, the controller may release the parking braking by driving the motor 220 in the braking release direction.

The controller (not illustrated) is provided to control the operation of the motor 220. The controller may be disposed between the reduction gear unit 230 and the cover 255 accommodated in the second chamber 251b of the main housing 251, and may be mounted and supported on the actuator housing 250 by the bolt. The controller may include a printed circuit board 290, a plurality of electronic elements, and a connector 285 that receives power or transmits and sends electrical signals.

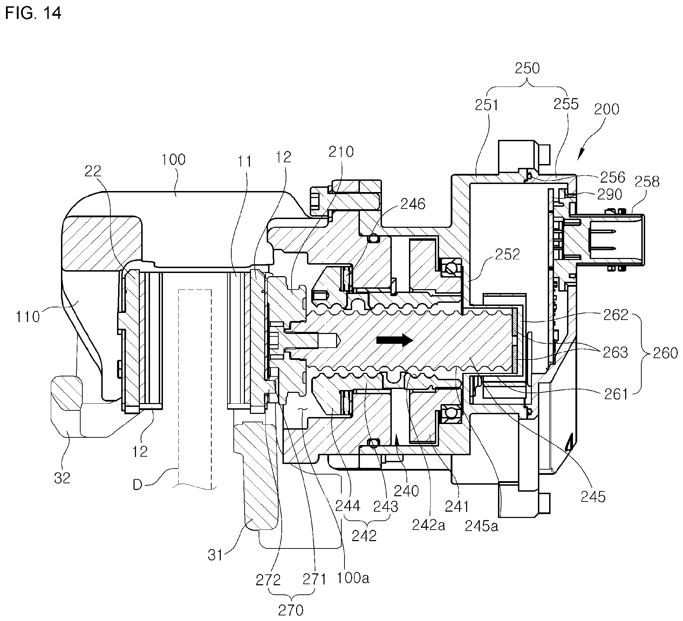

In addition, the controller may include a current sensor (not illustrated) that measures the current provided to the motor 220, and may adjust and control the operation of the motor 220 based on the current information detected by the current sensor. When the ball screw shaft 245 contacts the stopper 260 while retreating in the maintenance mode for maintenance of the electromechanical brake system 1, the current applied to the motor 220 increases. In this case, the current sensor detects the amount of current provided to the motor 220 in real time and sends the detected current to the controller, and when a current value detected by the current sensor exceeds a normal value which is a preset value, the controller may determine that the retreat distance of the ball screw shaft 245 has reached the allowable retraction range to stop the operation of the motor 220. A detailed description thereof will be provided below with reference to FIG. 14.

Hereinafter, the operating method of the electromechanical brake system 1 according to the present exemplary embodiment will be described.

The operating method of the electromechanical brake system 1 according to the present exemplary embodiment includes a braking application mode that performs the braking of the vehicle, a braking release mode that releases the braking of the vehicle, a parking mode that performs the parking braking of the vehicle, and a maintenance mode for maintenance such as the replacement of the brake pad.

Since the parking mode of the electromechanical brake system 1 according to the present exemplary embodiment has been previously described with reference to FIGS. 9 to 11, the description will be omitted to prevent duplication of contents.

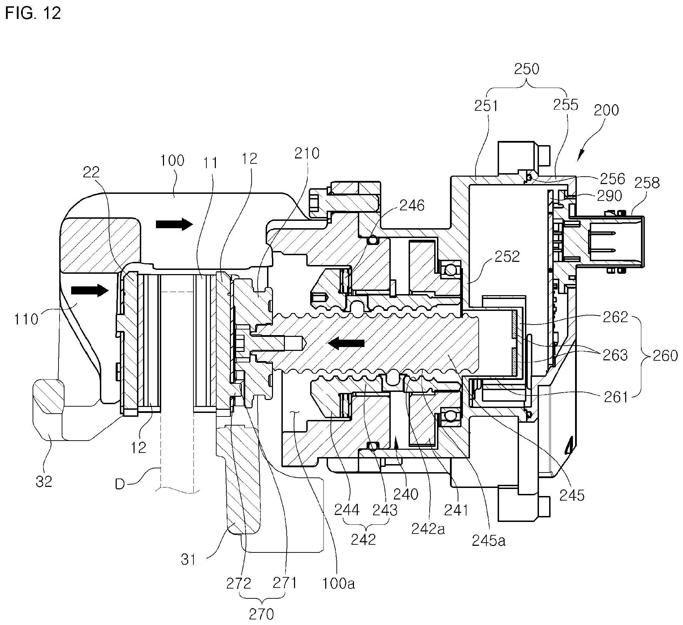

FIG. 12 is a lateral cross-sectional view illustrating the braking application mode of the electromechanical brake system 1 according to the present exemplary embodiment. Referring to FIG. 12, when a driver wishes to brake a vehicle, he/she applies a pedal force to the brake pedal and the pedal displacement sensor measures the amount of pedal force or displacement of the brake pedal in real time and transmits the related information to the controller. The controller may apply the braking of the vehicle by operating the motor 220 based on the pedal force information or the pedal displacement information received from the pedal displacement sensor. In addition, in the case of a vehicle equipped with a driving assistance function or an autonomous driving vehicle, the vehicle may independently determine a situation in which the braking is necessary and transmit the related information to the controller, and the controller may operate the motor 220 and apply the braking of the vehicle based on the related information.

To apply the braking of the vehicle, the motor 220 is driven in one direction, and thus, the driving shaft 221 of the motor 220 and the driving gear 231 provided thereon rotate in one direction. As the driving shaft 221 rotates in one direction, the driving belt 233 engaging with the driving shaft 221 rotates in one direction, and the driving pulley 232 engaging with the other side of the driving belt 233 also rotates in one direction by the rotation of the driving belt 233. In this case, as the diameter of the driving pulley 232 is set larger than that of the driving gear 231, the rotational power of the motor 220 is reduced and transmitted, and the driving pulley 232 and the driven gear 234 rotate together coaxially, so the driven gear 234 also rotates in one direction. The output gear 241 of the power conversion unit 240 engages with the driven gear 234, receives the rotational power of the driven gear 234, and rotates along with the ball nut 242. The rotational motion of the output gear 241 and the ball nut 242 is transmitted to the linear movement of the ball screw shaft 245 engaging with the inner peripheral surface of the ball nut 242, and the ball screw shaft 245 and the footer 210 coupled to the ball screw shaft 245 advance, so the brake pad approaches and closely contacts the brake disc D, thereby performing the braking of the vehicle.

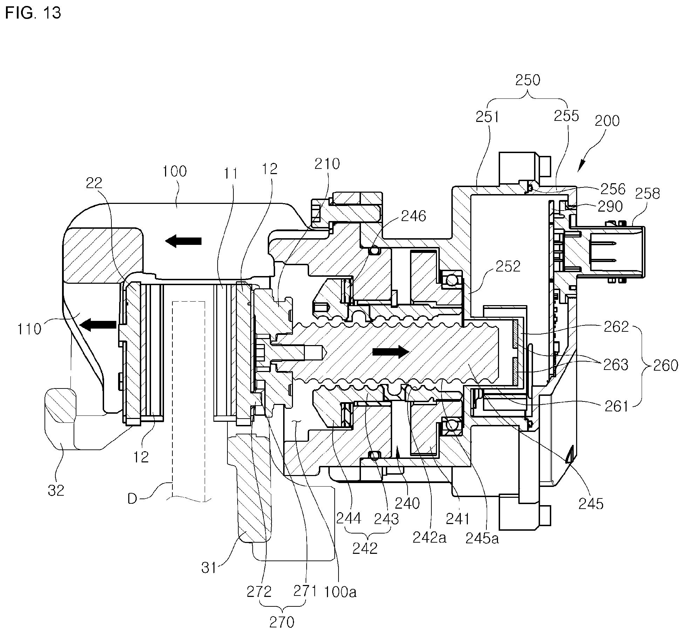

FIG. 13 is a lateral cross-sectional view illustrating the braking release mode of the electromechanical brake system 1 according to the present exemplary embodiment. Referring to FIG. 13, when a driver wishes to release the braking of the vehicle, to release the pedal force of the brake pedal, the pedal displacement sensor measures the release amount of pedal force or the return amount of the brake pedal in real time and transmits the related information to the controller. The controller may release the braking of the vehicle by operating the motor 220 based on the pedal force information or the pedal displacement information received from the pedal displacement sensor. On the other hand, when the vehicle equipped with the driving assistance or the autonomous driving function determines that the brake release is necessary, the related information may be transmitted to the controller, and the controller operates the motor 220 based on the related information to release the braking of the vehicle.

To release the braking of the vehicle, the motor 220 is driven in the other direction, which is an opposite direction to one direction, and thus, the driving shaft 221 of the motor 220 and the driving gear 231 provided thereon rotate in the other direction. As the driving shaft 221 rotates in the other direction, the driving belt 233 engaging with the driving shaft 221 rotates in the other direction, and the driving pulley 232 also rotates in the other direction by the rotation of the driving belt 233. Since the driving pulley 232 and the driven gear 234 rotate together coaxially, the driven gear 234 also rotates in the other direction, and the output gear 241 and the ball nut 242 of the power conversion unit 240 also rotate in the direction in which the ball screw shaft 245 retreats. The rotational motion of the output gear 241 and the ball nut 242 is transmitted and converted into the linear movement of the ball screw shaft 245, and thus, the ball screw shaft 245 and the footer 210 coupled to the ball screw shaft 245 retreat, so the brake pad is separated from the brake disc D, thereby releasing the braking of the vehicle.

Hereinafter, the maintenance mode of the electromechanical brake system 1 according to the present exemplary embodiment will be described.

When the components of the electromechanical brake system 1, such as the brake pads 11 and 12, are replaced or repaired, it may enter the maintenance mode. To smooth the maintenance in the maintenance mode, it is required to separate the brake pads 11 and 12 from the brake disc D as much as possible.

FIG. 14 is a lateral cross-sectional view illustrating the maintenance mode for the maintenance of the electromechanical brake system 1 according to the present exemplary embodiment. Referring to FIG. 14, when a driver or mechanic wishes to enter the maintenance mode, the controller receives the related signal and operates the motor 220 to separate the brake pads 11 and 12 from the brake disc D to the maximum distance.

Specifically, the motor 220 is additionally driven in the other direction, which is the direction in which the braking is released, and thus, the driving shaft 221 of the motor 220 and the driving gear 231 provided thereon further rotate in the other direction than the braking release mode. As the driving gear 231 rotates in the other direction, the driving belt 233, the driving pulley 232, and the driven gear 234 engaged with the driving shaft 221 also rotate additionally in the other direction, and the output gear 241 and the ball nut 242 of the power conversion unit 240 also rotate in a direction that further retreats than the braking release mode of the ball screw shaft 245. The ball screw shaft 245 and the footer 210 coupled to the ball screw shaft 245 also further retreat by the rotation of the output gear 241 and the ball nut 242, and the brake disc D and brake pads are additionally separated to facilitate maintenance.

In this case, when the ball screw shaft 245 retreats beyond the allowable retraction range or the brake pad is separated from the brake disc D beyond the maximum separation distance, the wear or collision may occur between the component elements, or the stuck phenomenon may occur between the component elements.

Accordingly, during the maintenance mode of the electromechanical brake system 1 according to the present exemplary embodiment, when the ball screw shaft 245 retreats beyond the allowable retraction range, the rear surface or rear end portion of the ball screw shaft 245 comes into contact with and is caught in the stopper 260 provided integrally with the actuator housing 250, so the additional retreat is limited. As the retreat of the ball screw shaft 245 is restricted by the stopper 260, the displacement no longer occurs, and thus, the current provided to the motor 220 increases. The current sensor transmits information on the current provided to the motor 220 to the controller, and when the current value transmitted from the current sensor exceeds a preset value, the controller determines that the retreat distance of the ball screw shaft 245 has reached the allowable retraction range and stops the operation of the motor 220. In this case, the rear surface or rear end portion of the ball screw shaft 245 comes into contact with the damper 263 of the stopper 260, thereby reducing the wear or shock that occurs when the two component elements contact each other.

In this way, the stopper 260, which is provided integrally with the actuator housing 250, may prevent the ball screw shaft 245 from retreating beyond the allowable retraction range, and similarly, may prevent the brake pads from separating beyond the maximum separation distance with respect to the brake disc D. As a result, it is possible to improve the operational reliability of the ball screw shaft 245 and the product, and improve the durability and lifespan of the product.

## Claims

1. An electromechanical brake system (1), comprising:
a footer (210) configured to be advanceable or retractable to move a brake pad (11) toward or away from a rotor of a wheel of a vehicle;
a motor (220) configured to provide power;
a reduction gear unit (230) configured to transmit the power of the motor (220);
a power conversion unit (240) configured to convert a rotational motion, transmitted from the reduction gear unit (230), into a linear motion to advance or retract the footer (210);
an actuator housing (250) accommodating the motor (220), the reduction gear unit (230), and at least a portion of the power conversion unit (240) therein; and
a controller configured to control an operation of the motor (220),
wherein the power conversion unit (240) includes:
a ball nut (242) configured to be rotatable by the power transmitted from the reduction gear unit (230); and
a ball screw shaft (245) operably engaged with the ball nut (242) and configured to be advanceable or retractable by rotation of the ball nut (242), wherein one end portion of the ball screw shaft (245) is connected to the footer (210), and
wherein the actuator housing (250) includes:
a stopper (260) configured to limit a retractable range of the ball screw shaft (245) by being contactable with an other end portion of the ball screw shaft (245),
wherein, if the retractable range of the ball screw shaft (245) is exceeded, the other end portion of the ball screw shaft (245) comes into contact with and is caught in the stopper (260), and
wherein the controller is configured to stop an operation of the motor (220) in response to detection of contact between the ball screw shaft (245) and the stopper (260).

2. The electromechanical brake system (1) of claim 1, wherein the stopper (260) is disposed in a recessed portion of a support plate (252) of the actuator housing (250), wherein a plane of the support plate (252) of the actuator housing (250) is orthogonal to an axial direction of the rotor.

3. The electromechanical brake system (1) of claim 2, wherein the stopper (260) includes:
a sleeve (261) extending along the axial direction of the rotor so that at least a part of the other end portion of the ball screw shaft (245) is movable within the sleeve (261); and
a seat (262) extending from the sleeve (261) in a direction different from the axial direction of the rotor and facing the other end portion of the ball screw shaft (245) to be contactable with the other end portion of the ball screw shaft (245).

4. The electromechanical brake system (1) of claim 1, wherein the controller configured to detect a current provided to the motor (220), and to stop the operation of the motor (220) according to the detected current.

5. The electromechanical brake system (1) of claim 3, further including a damper (263) disposed between the other end portion of the ball screw shaft (245) and the seat (262) of the stopper (260) of the actuator housing (250).

6. The electromechanical brake system (1) of claim 3, wherein the actuator housing (250) further includes:
a first chamber (251a) in which the motor (220) is accommodated;
a second chamber (251b) in which at least a portion of the reduction gear unit (230) is accommodated;
a third chamber (251c) in which at least a portion of the power conversion unit (240) is accommodated; and
wherein an inner space of the sleeve (261) is located at an end side of the third chamber (251c) of the actuator housing (250) in which at least a portion of the power conversion unit (240) is accommodated.

7. The electromechanical brake system (1) of claim 3, wherein the reduction gear unit (230) includes:
a driving gear (231) provided on a driving shaft of the motor (220),
a driving pulley (232),
a driving belt (233) connected between the driving gear (231) and the driving pulley (232) to transmit a rotational force of the driving gear (231) to the driving pulley (232), and
a driven gear (234) fixed to the driving pulley (232) to be rotatable together with the driving pulley (232) and rotatably engaged with the ball nut (242).

8. The electromechanical brake system (1) of claim 6, wherein:
the power conversion unit (240) further includes an output gear (241) having a ring shape, and coupled to the ball nut (242) to be rotatable together with the ball nut (242),
an outer peripheral surface of the output gear (241) has a first screw thread (241a) engaged with the driven gear (234), and
an inner peripheral surface of the ball nut (242) has a second screw thread (242a) operably engaged with the ball screw shaft (245).

9. The electromechanical brake system (1) of claim 7, wherein an outer peripheral surface of the ball screw shaft (245) has a third screw thread (245a) operably engaged with the second screw thread (242a) of the ball nut.

10. The electromechanical brake system (1) of claim 3, wherein: a groove (271) is formed to be recessed from a surface of the footer (210) facing a pad plate (21) of a brake pad (11), and
a protrusion (272) protruding from a surface of the pad plate of the brake pad (11) and inserted in the groove (271) of the footer (210) to limit rotation of the footer (210) and the ball screw shaft (245).

11. The electromechanical brake system (1) of claim 10, wherein the groove (271) of the footer (210) and the protrusion (272) of the pad plate (21) are located eccentrically with respect to a rotation axis of the ball screw shaft (245).

12. The electromechanical brake system (1) of claim 7, further comprising a parking driving unit (280) configured to perform parking braking, the parking driving unit (280) including:
a ratchet (281) provided on the driving pulley (232);
a pawl (282) configured to be movable to be engaged with the ratchet (281) of the driving pulley (232);
a pawl housing (283) to which the pawl (282) is rotatably coupled;
a solenoid actuator (285) comprising a solenoid pin (284) configured to move the pawl (282); and
a torsion spring (286) configured to apply an elastic force to the pawl (282) in a direction away from the ratchet (281).

13. The electromechanical brake system (1) of claim 8, wherein the ball nut (242) includes:
a body part (243) extending along the axial direction of the rotor and having the output gear (241) coupled to an outer peripheral surface of the body part (243);
a head part (244) provided at one end portion of the body part (243) and having a larger outer diameter than the body part (243); and
a thrust bearing (246) interposed between the head part (244) and a caliper housing (100) to which the actuator is mounted.

14. A method of operating an electromechanical brake system (1), the method comprising:
rotating a rotatable structure by power provided through at least one gear from a motor (220);
advancing or retracting a linearly movable structure connected to a footer (210) to move a brake pad (11) toward or away from a rotor of a wheel of a vehicle by rotation of the rotatable structure;
detecting contact between the linearly movable structure and a stopper (260) included in an actuator housing (250); and
by a controller, controlling to stop an operation of the motor (220) in response to detection of the contact between the linearly movable structure and the stopper (260).

15. The method of claim 14, wherein the controlling to stop the operation comprises:
by a current sensor, detecting a value of current supplied to the motor (220);
by the controller, controlling to stop the operation of the motor (220) in response to the detected current value exceeding a preset value.

## Patentansprüche

1. Elektromechanisches Bremssystem (1), umfassend:
ein Fußteil (210), das so konfiguriert ist, dass es vorschiebbar oder zurückziehbar ist, um einen Bremsbelag (11) zu einem Rotor eines Rads eines Fahrzeugs hinzubewegen oder von diesem wegzubewegen;
einen Motor (220), der so konfiguriert ist, dass er Leistung bereitstellt;
eine Untersetzungsgetriebeeinheit (230), die so konfiguriert ist, dass sie die Leistung des Motors (220) überträgt;
eine Leistungsumwandlungseinheit (240), die so konfiguriert ist, dass sie eine von der Untersetzungsgetriebeeinheit (230) übertragene Drehbewegung in eine Linearbewegung umwandelt, um das Fußteil (210) vorzuschieben oder zurückzuziehen;
ein Aktuatorgehäuse (250), das den Motor (220), die Untersetzungsgetriebeeinheit (230) und zumindest einen Abschnitt der Leistungsumwandlungseinheit (240) darin aufnimmt; und
eine Steuerung, die so konfiguriert ist, dass sie einen Betrieb des Motors (220) steuert;
wobei die Leistungsumwandlungseinheit (240) beinhaltet:
eine Kugelmutter (242), die so konfiguriert ist, dass sie durch die von der Untersetzungsgetriebeeinheit (230) übertragene Leistung drehbar ist; und
eine Kugelschraubenwelle (245), die mit der Kugelmutter (242) funktionsmäßig in Eingriff steht und so konfiguriert ist, dass sie durch Drehung der Kugelmutter (242) vorschiebbar oder zurückziehbar ist, wobei ein Endabschnitt der Kugelschraubenwelle (245) mit dem Fußteil (210) verbunden ist, und
wobei das Aktuatorgehäuse (250) beinhaltet:
einen Anschlag (260), der so konfiguriert ist, dass er einen zurückziehbaren Bereich der Kugelschraubenwelle (245) begrenzt, indem er mit einem anderen Endabschnitt der Kugelschraubenwelle (245) in Kontakt gebracht werden kann, wobei, falls der zurückziehbare Bereich der Kugelschraubenwelle (245) überschritten wird, der andere Endabschnitt der Kugelschraubenwelle (245) in Kontakt mit dem Anschlag (260) kommt und von diesem festgehalten wird, und wobei die Steuerung so konfiguriert ist, dass sie einen Betrieb des Motors (220) in Antwort auf die Erfassung eines Kontakts zwischen der Kugelschraubenwelle (245) und dem Anschlag (260) stoppt.

2. Elektromechanisches Bremssystem (1) nach Anspruch 1, wobei der Anschlag (260) in einem vertieften Abschnitt einer Stützplatte (252) des Aktuatorgehäuses (250) angeordnet ist, wobei eine Ebene der Stützplatte (252) des Aktuatorgehäuses (250) orthogonal zu einer axialen Richtung des Rotors verläuft.

3. Elektromechanisches Bremssystem (1) nach Anspruch 2, wobei der Anschlag (260) beinhaltet:
eine Hülse (261), die sich entlang der axialen Richtung des Rotors erstreckt, so dass zumindest ein Teil des anderen Endabschnitts der Kugelschraubenwelle (245) innerhalb der Hülse (261) bewegbar ist; und
einen Sitz (262), der sich von der Hülse (261) in einer von der axialen Richtung des Rotors verschiedenen Richtung erstreckt und dem anderen Endabschnitt der Kugelschraubenwelle (245) zugewandt ist, um mit dem anderen Endabschnitt der Kugelschraubenwelle (245) in Kontakt bringbar zu sein.

4. Elektromechanisches Bremssystem (1) nach Anspruch 1, wobei die Steuerung so konfiguriert ist, dass sie einen dem Motor (220) bereitgestellten Strom erfasst und den Betrieb des Motors (220) entsprechend dem erfassten Strom stoppt.

5. Elektromechanisches Bremssystem (1) nach Anspruch 3, das weiterhin einen Dämpfer (263) beinhaltet, der zwischen dem anderen Endabschnitt der Kugelschraubenwelle (245) und dem Sitz (262) des Anschlags (260) des Aktuatorgehäuses (250) angeordnet ist.

6. Elektromechanisches Bremssystem (1) nach Anspruch 3, wobei das Aktuatorgehäuse (250) weiterhin beinhaltet:
eine erste Kammer (251a), in der der Motor (220) aufgenommen ist;
eine zweite Kammer (251b), in der wenigstens ein Abschnitt der Untersetzungsgetriebeeinheit (230) aufgenommen ist; und
eine dritte Kammer (251c), in der zumindest ein Abschnitt der Leistungsumwandlungseinheit (240) aufgenommen ist; und
wobei sich ein Innenraum der Hülse (261) an einer Endseite der dritten Kammer (251c) des Aktuatorgehäuses (250) befindet, in der zumindest ein Abschnitt der Leistungsumwandlungseinheit (240) aufgenommen ist.

7. Elektromechanisches Bremssystem (1) nach Anspruch 3, wobei die Untersetzungsgetriebeeinheit (230) beinhaltet:
ein Antriebszahnrad (231), das auf einer Antriebswelle des Motors (220) bereitgestellt ist,
eine Antriebsscheibe (232),
einen Antriebsriemen (233), der zwischen dem Antriebszahnrad (231) und der Antriebsscheibe (232) verbunden ist, um eine Drehkraft des Antriebszahnrads (231) auf die Antriebsscheibe (232) zu übertragen, und
ein Abtriebszahnrad (234), das an der Antriebsscheibe (232) so fixiert ist, dass es zusammen mit der Antriebsscheibe (232) drehbar ist und mit der Kugelmutter (242) drehbar in Eingriff steht.

8. Elektromechanisches Bremssystem (1) nach Anspruch 6, wobei:
die Leistungsumwandlungseinheit (240) weiterhin ein Ausgangszahnrad (241) beinhaltet, das eine Ringform aufweist und mit der Kugelmutter (242) so gekoppelt ist, dass es zusammen mit der Kugelmutter (242) drehbar ist,
eine Außenumfangsfläche des Ausgangszahnrads (241) ein erstes Schraubengewinde (241a) aufweist, das mit dem Abtriebszahnrad (234) in Eingriff steht, und
eine Innenumfangsfläche der Kugelmutter (242) ein zweites Schraubengewinde (242a) aufweist, das funktionsmäßig mit der Kugelschraubenwelle (245) in Eingriff steht.

9. Elektromechanisches Bremssystem (1) nach Anspruch 7, wobei eine Außenumfangsfläche der Kugelschraubenwelle (245) ein drittes Schraubengewinde (245a) aufweist, das funktionsmäßig mit dem zweiten Schraubengewinde (242a) der Kugelmutter in Eingriff steht.

10. Elektromechanisches Bremssystem (1) nach Anspruch 3, wobei: eine Nut (271) so ausgebildet ist, dass sie von einer Oberfläche des Fußteils (210), die einer Belagplatte (21) eines Bremsbelags (11) zugewandt ist, vertieft ist, und
ein Vorsprung (272) von einer Oberfläche der Belagplatte des Bremsbelags (11) vorsteht und in die Nut (271) des Fußteils (210) eingesetzt ist, um die Drehung des Fußteils (210) und der Kugelschraubenwelle (245) zu begrenzen.

11. Elektromechanisches Bremssystem (1) nach Anspruch 10, wobei die Nut (271) des Fußteils (210) und der Vorsprung (272) der Belagplatte (21) in Bezug auf eine Drehachse der Kugelschraubenwelle (245) exzentrisch angeordnet sind.

12. Elektromechanisches Bremssystem (1) nach Anspruch 7, das weiterhin eine Parkantriebseinheit (280) umfasst, die so konfiguriert ist, dass sie eine Parkbremsung ausführt, wobei die Parkantriebseinheit (280) beinhaltet:
ein Ratschenrad (281), das auf der Antriebsscheibe (232) bereitgestellt ist;
eine Sperrklinke (282), die so konfiguriert ist, dass sie bewegbar ist, um mit dem Ratschenrad (281) der Antriebsscheibe (232) in Eingriff zu kommen;
ein Sperrklinkengehäuse (283), an das die Sperrklinke (282) drehbar gekoppelt ist;
einen Magnetaktuator (285), der einen Magnetstift (284) umfasst, der so konfiguriert ist, dass er die Sperrklinke (282) bewegt; und
eine Torsionsfeder (286), die so konfiguriert ist, dass sie eine elastische Kraft an der Sperrklinke (282) in einer Richtung weg von dem Ratschenrad (281) ausübt.

13. Elektromechanisches Bremssystem (1) nach Anspruch 8, wobei die Kugelmutter (242) beinhaltet:
ein Körperteil (243), das sich entlang der axialen Richtung des Rotors erstreckt und ein Ausgangszahnrad (241) aufweist, das mit einer Außenumfangsfläche des Körperteils (243) gekoppelt ist;
ein Kopfteil (244), das an einem Endabschnitt des Körperteils (243) bereitgestellt ist und einen größeren Außendurchmesser als das Körperteil (243) aufweist; und
ein Axiallager (246), das zwischen dem Kopfteil (244) und einem Bremssattelgehäuse (100) angeordnet ist, an dem der Aktuator montiert ist.

14. Verfahren zum Betreiben eines elektromechanischen Bremssystems (1), wobei das Verfahren umfasst:
Drehen einer drehbaren Struktur durch Leistung, die über zumindest ein Zahnrad von einem Motor (220) bereitgestellt wird;
Vorschieben oder Zurückziehen einer linear bewegbaren Struktur, die mit einem Fußteil (210) verbunden ist, um einen Bremsbelag (11) durch Drehen der drehbaren Struktur zu einem Rotor eines Rads eines Fahrzeugs hinzubewegen oder von diesem wegzubewegen;
Erfassen eines Kontakts zwischen der linear bewegbaren Struktur und eines in einem Aktuatorgehäuse (250) enthaltenen Anschlags (260); und
Steuern durch eine Steuerung, um einen Betrieb des Motors (220) in Antwort auf die Erfassung des Kontakts zwischen der linear bewegbaren Struktur und dem Anschlag (260) zu stoppen.

15. Verfahren nach Anspruch 14, wobei das Steuern zum Stoppen des Betriebs umfasst:
Erfassen eines Wertes des dem Motor (220) zugeführten Stroms durch einen Stromsensor;
Steuern durch die Steuerung, um den Betrieb des Motors (220) zu stoppen, wenn der erfasste Stromwert einen voreingestellten Wert überschreitet.

## Revendications

1. Système de frein électromécanique (1), comprenant :
un pied (210) prévu pour être avançable ou reculable afin de rapprocher ou d'éloigner une plaquette de frein (11) du rotor d'une roue de véhicule ;
un moteur (220) prévu pour fournir de l'énergie ;
une unité de réducteur de vitesse (230) prévue pour transmettre la puissance du moteur (220) ;
une unité de conversion de puissance (240) prévue pour convertir un mouvement de rotation, transmis depuis l'unité de réducteur de vitesse (230), en un mouvement linéaire pour avancer ou reculer le pied (210) ;
un boîtier d'actionneur (250) où sont logés le moteur (220), l'unité de réducteur de vitesse (230) et au moins une partie de l'unité de conversion de puissance (240) ; et
un contrôleur prévu pour commander le fonctionnement du moteur (220), l'unité de conversion de puissance (240) comprenant :
un écrou sphérique (242) prévu pour être rotatif par la puissance transmise depuis l'unité de réducteur de vitesse (230) ; et
un arbre à vis à billes (245) en prise fonctionnelle avec l'écrou sphérique (242) et prévu pour être avançable ou reculable par rotation de l'écrou sphérique (242), une partie d'extrémité de l'arbre à vis à billes (245) étant raccordée au pied (210), et
où le boîtier d'actionneur (250) comprend :
une butée (260) prévue pour limiter la portée de recul de l'arbre à vis à billes (245) en pouvant être mise en contact avec une autre partie d'extrémité de l'arbre à vis à billes (245), où, si la portée de recul de l'arbre à vis à billes (245) est dépassée, l'autre partie d'extrémité de l'arbre à vis à billes (245) entre en contact avec la butée (260) et est prise dans celle-ci, et où le contrôleur est prévu pour arrêter le fonctionnement du moteur (220) en réaction à la détection d'un contact entre l'arbre à vis à billes (245) et la butée (260).

2. Système de frein électromécanique (1) selon la revendication 1, où la butée (260) est disposée dans une partie en retrait d'une plaque de support (252) du boîtier d'actionneur (250), un plan de la plaque de support (252) du boîtier d'actionneur (250) étant orthogonal à une direction axiale du rotor.

3. Système de frein électromécanique (1) selon la revendication 2, où la butée (260) comprend :
un manchon (261) s'étendant dans la direction axiale du rotor de sorte qu'au moins une section de l'autre partie d'extrémité de l'arbre à vis à billes (245) est mobile à l'intérieur du manchon (261) ; et
un siège (262) s'étendant depuis le manchon (261) dans une direction différente de la direction axiale du rotor et opposée à l'autre partie d'extrémité de l'arbre à vis à billes (245) pour pouvoir être en mis contact avec l'autre partie d'extrémité de l'arbre à vis à billes (245).

4. Système de frein électromécanique (1) selon la revendication 1, où le contrôleur est prévu pour détecter un courant fourni au moteur (220), et pour arrêter le fonctionnement du moteur (220) en fonction du courant détecté.

5. Système de frein électromécanique (1) selon la revendication 3, comprenant en outre un amortisseur (263) disposé entre l'autre partie d'extrémité de l'arbre à vis à billes (245) et le siège (262) de la butée (260) du boîtier d'actionneur (250).

6. Système de frein électromécanique (1) selon la revendication 3, où le boîtier d'actionneur (250) comprend en outre :
une première chambre (251a) dans laquelle le moteur (220) est logé ;
une deuxième chambre (251b) dans laquelle au moins une partie de l'unité de réducteur de vitesse (230) est logée ;
une troisième chambre (251c) dans laquelle au moins une partie de l'unité de conversion de puissance (240) est logée ; et
où un espace intérieur du manchon (261) est situé sur un côté d'extrémité de la troisième chambre (251c) du boîtier d'actionneur (250) dans laquelle au moins une partie de l'unité de conversion de puissance (240) est logée.

7. Système de frein électromécanique (1) selon la revendication 3, où l'unité de réducteur de vitesse (230) comprend :
un engrenage d'entraînement (231) disposé sur un arbre d'entraînement du moteur (220), une poulie d'entraînement (232),
une courroie d'entraînement (233) raccordée entre l'engrenage d'entraînement (231) et la poulie d'entraînement (232) pour transmettre une force de rotation de l'engrenage d'entraînement (231) à la poulie d'entraînement (232), et
un engrenage entraîné (234) fixé à la poulie d'entraînement (232) de manière à être rotatif avec la poulie d'entraînement (232) et mis en prise avec l'écrou sphérique (242) par rotation.

8. Système de frein électromécanique (1) selon la revendication 6, où :
l'unité de conversion de puissance (240) comprend en outre un engrenage de sortie (241) de forme annulaire, et raccordé à l'écrou sphérique (242) de manière à être rotatif avec l'écrou sphérique (242),
une surface périphérique extérieure de l'engrenage de sortie (241) présente un premier filet (241a) en prise avec l'engrenage entraîné (234), et
une surface périphérique intérieure de l'écrou sphérique (242) présente un deuxième filet (242a) en prise fonctionnelle avec l'arbre à vis à billes (245).

9. Système de frein électromécanique (1) selon la revendication 7, où une surface périphérique extérieure de l'arbre à vis à billes (245) présente un troisième filet (245a) en prise fonctionnelle avec le deuxième filet (242a) de l'écrou sphérique.

10. Système de frein électromécanique (1) selon la revendication 3, où :
une rainure (271) est formée de manière à être ménagée dans une surface du pied (210) opposée à une plaque (21) d'une plaquette de frein (11), et
une saillie (272) s'étend depuis une surface de la plaque de plaquette de frein (11) et est insérée dans la rainure (271) du pied (210) pour limiter la rotation du pied (210) et de l'arbre à vis à billes (245).

11. Système de frein électromécanique (1) selon la revendication 10, où la rainure (271) du pied (210) et la saillie (272) de la plaque de plaquette (21) sont disposées de manière excentrique par rapport à un axe de rotation de l'arbre à vis à billes (245).

12. Système de frein électromécanique (1) selon la revendication 7, comprenant en outre une unité de freinage de stationnement (280) prévue pour effectuer un freinage de stationnement, ladite unité de freinage de stationnement (280) comprenant :
une roue à rochet (281) disposée sur la poulie d'entraînement (232) ;
un cliquet (282) prévu de manière à être mobile pour être mis en prise avec la roue à rochet (281) de la poulie d'entraînement (232) ;
un carter de cliquet (283) auquel le cliquet (282) est raccordé par rotation ;
un actionneur à solénoïde (285) comprenant une goupille de solénoïde (284) prévue pour déplacer le cliquet (282) ; et
un ressort de torsion (286) prévu pour appliquer une force élastique sur le cliquet (282) dans une direction d'éloignement de la roue à rochet (281).

13. Système de frein électromécanique (1) selon la revendication 8, où l'écrou sphérique (242) comprend :
une partie de corps (243) s'étendant dans la direction axiale du rotor et ayant l'engrenage de sortie (241) raccordé à une surface périphérique extérieure de ladite partie de corps (243) ;
une partie de tête (244) disposée à une partie d'extrémité de la partie de corps (243) et ayant un diamètre extérieur supérieur à celui de la partie de corps (243) ; et
un palier de butée (246) intercalé entre la partie de tête (244) et un carter d'étrier (100) sur lequel l'actionneur est monté.

14. Procédé de fonctionnement d'un système de frein électromécanique (1), ledit procédé comprenant :
l'entraînement en rotation d'une structure rotative par la puissance fournie par au moins un engrenage d'un moteur (220) ;
l'avance ou le recul d'une structure déplaçable linéairement raccordée à un pied (210) afin de rapprocher ou d'éloigner une plaquette de frein (11) du rotor d'une roue de véhicule par rotation de la structure rotative ;
la détection d'un contact entre la structure déplaçable linéairement et une butée (260) comprise dans un boîtier d'actionneur (250) ; et
la commande, par un contrôleur, d'un arrêt de fonctionnement du moteur (220) en réaction à la détection du contact entre la structure déplaçable linéairement et la butée (260).

15. Procédé selon la revendication 14, où la commande d'arrêt de fonctionnement comprend :
la détection, par un capteur de courant, d'une valeur de courant fourni au moteur (220) ; la commande, par le contrôleur, d'un arrêt du fonctionnement du moteur (220) en réaction au dépassement d'une valeur prédéfinie par la valeur de courant détectée.
